# EUROPEAN PATENT APPLICATION

(11) **EP 3 800 785 A1**
(43) Date of publication of application: **07.04.2021**
(21) Application number: 19382858.9
(22) Date of filing: 04.10.2019
(51) Int. Cl.: H02S 20/32

(54) **BUOYANT INSTALLATION FOR PHOTOVOLTAIC POWER GENERATION**

(71) Applicant: Fundación Tecnalia Research & Innovation, 48160 Derio - Bizkaia (ES)
(72) Inventor: Berque, Joannes, 48160 Derio - Bizkaia (ES); Rico Rubio, Antonio, 48160 Derio - Bizkaia (ES); Sellner, Jan, 48160 Derio - Bizkaia (ES); Mendikoa Alonso, Iñigo, 48160 Derio - Bizkaia (ES); Vega de Seoane López, José María, 48160 Derio - Bizkaia (ES)
(74) Representative: Balder IP Law, S.L.

(57) **Abstract**

An installation for photovoltaic power generation comprising at least one solar panel comprising a plurality of photovoltaic cells, and a buoyant support structure, the at least one solar panel being arranged on the support structure, the installation further comprising a subsystem for sun-tracking, the subsystem for sun-tracking comprising at least one compartment and means for controlling an amount of liquid in the at least one compartment, whereby the amount of liquid in the at least one compartment determines a degree of inclination of the support structure in relation to a horizontal plane. Also, a method comprising: arranging at least one solar panel on a buoyant support structure, the at least one solar panel comprising a plurality of photovoltaic cells; arranging a subsystem for sun-tracking, the subsystem for sun-tracking comprising at least one compartment and means for controlling an amount of liquid in the at least one compartment; arranging both the subsystem for sun-tracking and the at least one solar panel on the buoyant support structure on a surface of a marine environment; and changing a degree of inclination of the support structure in relation to a horizontal plane by changing the amount of liquid in the at least one compartment.

## Description

### TECHNICAL FIELD

The present invention relates to the field of photovoltaic power installations and, more particularly, to floating installations for photovoltaic power generation.

### STATE OF THE ART

Photovoltaic power is becoming increasingly cost-efficient and represents one of the most promising alternatives for environmental-friendly production of energy. However, one problem is to find adequate space for the installation of the photovoltaic equipment, including the photovoltaic cells, generally arranged on what is commonly referred to as photovoltaic panels or solar panels, comprising large amounts of photovoltaic cells arranged in an array or similar. Although solar cells are becoming increasingly efficient, large-scale production of photovoltaic power will require a substantial amount of space for accommodating the solar panels, which have to be arranged in a manner that provides for efficient irradiation of the panels, preferably at an appropriate angle. It is well-known in the art to provide solar panels on roofs and on the ground, and also to provide means for re-orientation of the solar panels, typically in order to optimize the angle of incidence of the sunlight on the panels. It is generally preferred that the solar panels face the sun so that the sunlight is received substantially orthogonally to the surfaces of the panels. The corresponding adaptation of the orientation of the solar panels is often referred to as "sun-tracking".

The availability of suitable and economically attractive surfaces for placement of the solar panels, taking into account other factors such as accessibility, compatibility with other uses, etc., may become an obstacle for large-scale deployment of photovoltaic power installations. For example, large-scale deployment of solar panels may have a negative impact on the availability of space for agriculture. Here, one alternative may be the use of floating installations for the production of photovoltaic power, making use of the surfaces of rivers, seas, water reservoirs, lakes and oceans. This kind of water surfaces often constitute large un-shaded areas, sometimes close to electricity consumption centers and/or close to points where connection to a power distribution grid can be established. US-2014/0034110-A1 and US-2017/0040926-A1 disclose examples of such floating photovoltaic installations, including means for modifying the orientation of the solar panels, that is, sun-tracking.

### DESCRIPTION OF THE INVENTION

A first aspect of the invention relates to an installation for photovoltaic power generation comprising at least one solar panel comprising a plurality of photovoltaic cells, and a buoyant support structure, the at least one solar panel being arranged on the support structure, the installation further comprising a subsystem for sun-tracking, the subsystem for sun-tracking comprising at least one compartment and means for controlling an amount of liquid (typically water) in the at least one compartment, whereby the amount of liquid in the at least one compartment determines a degree of inclination of the support structure (and thereby, of the installation as a whole) in relation to a horizontal plane (and, thus, in relation to the surface of the water in which the installation is floating).

In this document the term "solar panel" refers to a panel comprising a plurality of photovoltaic cells, generally arranged in an array or similar.

The term "buoyant support structure" refers to any kind of support structure that is capable of supporting the at least one solar panel in a manner that keeps the at least one panel above the water surface while the support structure is floating in the water. The buoyant support structure typically comprises one or more compartments that provide for floatability by being completely or partly filled with a gas or a mixture of gases such as air, and/or by other elements featuring a relatively low density that provide for buoyancy. In some embodiments the support structure may comprise means for emergency buoyancy support that are not contributing to buoyancy under normal conditions (for example, one or more compartments or low density members that are not submerged under normal conditions) but that contribute to buoyancy under extreme conditions, such as in the case of substantial waves, wind, snow or rain that tend to submerge the support structure beyond a certain limit. The means for emergency buoyancy support can also comprise tensioned mooring means such as cables, etc., that can serve to prevent the installation from becoming excessively submerged, such as totally submerged.

The at least one compartment can comprise one compartment or several compartments, and the means for controlling an amount of water in the at least one compartment typically comprise at least one pump and associated conduits for pumping water into and/or out of the compartment, for example, between two or more compartments that are part of the subsystem for sun-tracking, or between one or more compartments of the subsystem and a liquid reservoir external to the subsystem for sun-tracking, such as a ballast space within the support structure, or the ocean, sea, lake reservoir or river where the substructure is floating.

In some embodiments, the support structure comprises a ballast space, and the at least one compartment is at least partially positioned higher up than the ballast space. In some of these embodiments, the ballast space comprises a single enclosure or tank, whereas in some other embodiments the ballast space comprises a plurality of enclosures or tanks.

In some embodiments, when the support structure is in a non-inclined position, the at least one compartment is substantially placed above the surface of the water in which the installation is floating.

The term "higher up" refers to the position along a vertical axis when the support structure is in its neutral positioned, that is, not inclined. For example, a position of one or more of the compartments relatively high up, such as above the water level, can be helpful for achieving a desired inclination with a minimum of transfer of fluid into or out of the compartment. The expression "substantially placed above the surface of the water" implies that most of the volume of the respective compartment is placed above the surface of the water.

The reference to "a ballast space" does not require this to be one single continuous ballast space: the ballast space may comprise a plurality of sub-spaces or segments, separated from each other or in fluid communication with each other.

In some embodiments, the at least one compartment comprises a single compartment with a shape (e.g. a three-dimensional curvilinear shape) such that the amount of liquid in the single compartment determines both a first degree of inclination in a first axis of the support structure and a second degree of inclination in a second axis of the support structure (and thereby, of the installation as a whole) in relation to the horizontal plane.

The compartment may be adapted to displace the center of gravity thereof in two different axes when liquid is present therein, the two axes being perpendicular (e.g. lengthwise and widthwise axes of the support structure). The compartment has the shape thereof, particularly the inner shape of the compartment where the liquid is introduced, designed such that when different amounts of liquid are within the compartment, the center of gravity of the compartment with the liquid is displaced along one of the axes or both axes.

The shape may be, for instance but without limitation, a curvilinear shape such as a helicoidal shape, a shape in the form of truncated ring, a shape of a truncated ellipse or the like. Preferably but not necessarily, any one of such shapes features a vertical dimension (in relation to the horizontal) aside from the own height for storing a volume of liquid, and more preferably has two ends at different heights in relation to the horizontal. Owing to such shapes it is possible to control the center of gravity of the compartment so that the displacement thereof is displaced by controlling the amount of liquid within the compartment based on the shape of the compartment, thus the installation is capable of sun-tracking such that the inclination of the buoyant support structure is changed in two different axes of the support structure in relation to the horizontal plane. Accordingly, two different simultaneous inclinations with respect to the horizontal may be attained with a single compartment. That is to say, the first degree of inclination is an angle formed between the horizontal and e.g. the lengthwise axis of the support structure, and the second degree of inclination is an angle formed between the horizontal and e.g. the widthwise axis of the support structure. In this way the position of the sun may be tracked more effectively as it may be followed both in azimuth and zenith, which in turn results in an angle formed between the surface of the at least one solar panel and the sunlight received that may differ less from orthogonality.

Further, in these embodiments, the support structure preferably comprises an ellipsoid shape and the longitudinal axis of the support structure is parallel to the horizontal plane. This shape and arrangement may improve the stability of the support structure against the movements or rotations thereof due to wind gusts and waves.

In some embodiments, the single compartment has a helicoidal shape, the helicoidal shape preferably having two ends at different heights in relation to the horizontal plane.

In some embodiments, the at least one compartment comprises a first compartment and a second compartment, the first and second compartments being optionally placed in correspondence with opposite sides of the support structure, so that inclination of the support structure or the at least one solar panel is at least in part determined by the level of liquid in the first and second compartments.

That is, by adapting the water level in the two compartments, for example, by emptying one of them and filling the other, a weight distribution of the support structure is adapted that can serve to incline the support structure towards one of its sides or the other, thereby adapting the orientation of the solar panel or panels versus the sun. Whereas reference is made to two compartments, the subsystem can obviously include further compartments, for example, two or more compartments that in some embodiments are in correspondence with each side, or compartments that in some embodiments are arranged in correspondence with more than two of the sides, so as to provide for multi-axis sun tracking. In some embodiments, compartments may be placed opposite each other.

In some embodiments, the means for controlling an amount of liquid in the at least one compartment are arranged or further arranged for selectively displacing liquid from the first compartment to the second compartment, and/or from the second compartment to the first compartment.

Thus, the combined effect of reducing the amount of liquid on one side of the support structure while simultaneously increasing the amount of liquid on the other side of the support structure, preferably above the center of gravity of the support structure, allows for a minimizing the amount of liquid that has to be transferred for the purpose of sun-tracking, thereby minimizing the amount of energy needed for sun-tracking.

In some embodiments, the means for controlling an amount of liquid in the at least one compartment are arranged or further arranged for selectively extracting liquid from any compartment (e.g. single compartment, first compartment, second compartment, etc.) of the at least one compartment to a water on which the installation floats, and/or for selectively introducing liquid from the water on which the installation floats into any compartment (e.g. single compartment, first compartment, second compartment, etc.) of the at least one compartment.

By extracting liquid from the compartment(s) and introducing liquid thereinto, more or less liquid can be controlled in the compartment(s) so as to orient the support structure and, thus, the surface of the at least one solar panel receiving sunlight may be maximized by following the position of the sun.

In some embodiments, the ballast space (with a single or a plurality of compartments or tanks) is in fluid communication with at least one water inlet positioned in correspondence with a side of the support structure, so that when the installation is installed in water, water will flow into the ballast space through the at least one water inlet when the support structure is inclined beyond a certain inclination threshold.

The use of a water inlet communicating with a ballasts space is known in the art of ships, where JP-2008/094345-A seems to suggest a similar approach for the purpose of restoring stability to a ship that has been damaged in a manner that causes water to enter its hull. Now, applying this measure to a solar power installation that is intended to be inclined for sun-tracking appears to be counterintuitive. Also, differently from what is the case with a ship that can be expected to suffer damages during its lifetime as the result of collisions while navigating, solar power installations are generally expected to remain on fixed locations, wherefore the risk for damage to the hull is almost inexistent. However, it has been found that whereas the sun-tracking system allows for a generally controlled inclination, such control may sometimes be lost under extreme circumstances, such as during storms where the wind may cause the installation to become inclined beyond what is desirable from a safety point of view. Under such circumstances, power failures are also likely to occur, which may impede the sun-tracking system from operating appropriately. Under such circumstances, a passive system for recovering stability by allowing water to flow into the ballast space and thus lower the center of gravity of the installation can be helpful to ensure survival and prevent damage such as overturning of the installation. In some embodiments, a plurality of such water inlets is present, for example, at least two water inlets positioned on opposite sides of the installation, or multiple water inlets on one or more sides of the installation.

In this context, and in spite of the fact that the stationary character of this kind of installations may minimize the risk of damage and undesired flooding of the installation, the presence of solar panels may imply that a relatively large surface may face wind gusts, which can have sudden impacts on the inclination of the installation. Thus, the use of a fail-safe system for reacting to an excessive inclination by lowering the center of gravity of the installation may indeed be desirable.

In some embodiments, the water inlet communicates with the ballast space via a pipe.

In some embodiments, the means for controlling an amount of liquid in the at least one compartment comprises a compressed air pump and one or more conduits connected thereto and to at least one air inlet of the at least one compartment.

By injecting compressed air into the compartment(s), changing the pressure of the compressed air within the compartment(s) and releasing it therefrom the amount of liquid in the compartment(s) is controlled. As more compressed air is within the compartment(s), or as the compressed air therein has more pressure, a lower amount of liquid will be within the compartment(s) and vice versa: as less compressed air is present or lower pressure has the compressed air, a greater amount of liquid will be within the compartment(s).

Likewise, when a solar panel of the at least one solar panel is mechanically coupled to a pivoting mechanism of the support structure and to two compartments of the at least one compartment, the solar panel can be oriented by changing the buoyancy of any one or both of the two compartments. Typically, the pivoting mechanism is attached to a supporting element so that the solar panel does not collide with the support structure and, thus, multiple inclinations of the solar panel are possible.

In some embodiments, at least one compartment of the subsystem for sun-tracking comprises a water inlet in the form of an open end through which the liquid may enter into and leave the compartment. Preferably, the water inlet, that is to say, the open end is at an end along the longitudinal axis of the compartment(s), and the compartment(s) is/are arranged such that the open end is at a lower height (in relation to the horizontal plane) than a second, closed end at an opposite side of the compartment(s).

As the compartment(s) is/are arranged such that the lower part comprises the open end, the open end is submerged when the installation is floating in the surface of water. The water can enter into the compartment(s) through the open end, and the amount of water that fills the compartment(s) is controlled by means of the compressed air within the compartment(s). When further compressed air is pumped into the compartment(s), or the pressure of the compressed air is increased, water is ejected through the open end thereby reducing the amount of liquid within the compartment(s).

In some embodiments, at least one conduit of the one or more conduits is adapted for connection to an air inlet of a compartment of a further installation of a photovoltaic power station. In some of these embodiments, two or more conduits of the one or more conduits are adapted for connection to respective air inlets of compartments of two or more further installations of a photovoltaic power station.

The compressed air pump of the means for controlling the amount of liquid may be used throughout part or an entire photovoltaic power station when the installation is arranged therein. In this sense, the compressed air pump modifies the amount of compressed air in the compartments of different installations via a plurality of conduits connected to each inlet and the compressed air pump. Part of the conduits may be common, i.e. they share one or a plurality of conduits for delivery of the compressed air, up to a location in which further conduits branch off from said conduits in common; the conduits branched off then may be connected to the air inlets for adjusting the amount of compressed air in the compartments.

In some embodiments, the means for controlling an amount of liquid in the at least one compartment comprises a pump for pumping out liquid that is inside of the at least one compartment and/or for pumping liquid into the at least one compartment.

The pump releases liquid, e.g. water, through a hole of the compartment. The hole may be intended for releasing liquid, or for the ingress of liquid but which may be used for releasing liquid as well. As liquid is pumped out from the compartment, the buoyancy of the latter is increased. The pump may additionally or alternatively pump liquid into the at least one compartment, for instance water on which the installation is floating. As described above, when a solar panel of the at least one solar panel is mechanically coupled to the pivoting mechanism and to two compartments of the at least one compartment, the solar panel can be oriented by changing the buoyancy of any one or both of the two compartments, something that may be achieved by pumping liquid out of the compartment(s) and/or into the compartment(s). In some embodiments, the hole corresponds to an open end of the compartment through which the liquid may be released.

In some embodiments, the pipe passes through at least one compartment of the subsystem for sun-tracking.

That is, the ballast space may be spaced from the water inlet, for example, by one or more of the first and second compartments, and a pipe, that is, one or more pipes, may be used to allow water to flow from the inlet to the ballast space.

In some embodiments, the installation additionally comprises a subsystem for prevention of submersion that does not include the at least one compartment of the subsystem for sun-tracking.

It has been found that with an adequately designed support structure and adequately placed compartments of the system for sun-tracking, displacement of a relatively small volume of water or other liquid into or out of a compartment, for example, from a compartment placed on one side of the support structure to a compartment placed on the opposite side of the support structure, can imply a substantial change in the inclination of the support structure and of the installation as such. It is desirable to minimize the amounts of liquid that have to be transferred for the purpose of adapting the inclination, so as to minimize the amount of energy that is consumed by the subsystem for sun-tracking during operation of the installation. Thus, it may be desirable to minimize the sizes of the compartments that are part of the subsystem for sun-tracking.

On the other hand, rain, storms, snow and other harsh weather conditions may sometimes exert a substantial force on the installation, driving it down into the water. It is often preferable to minimize the risk of submersion of the solar panels and associated circuitry and equipment. Thus, and whereas there is a desire to minimize the volume of the compartments of the subsystem for sun-tracking, it has been found that this can have an impact on the total floatability and on the risk of submersion of the entire installation or sensitive parts of it under harsh conditions. It has been found that this can be remedied by providing an additional subsystem configured to prevent submersion. In some embodiments, this additional subsystem may include poles, a taut mooring system, etc., or additional tanks or deposits.***>

In some embodiments, the subsystem for prevention of submersion comprises a flotation space, wherein the volume of the floatation space is at least twice the volume of all compartments of the subsystem for sun-tracking.

In many embodiments, the prevention of submersion is guaranteed by a floatation space having a substantial volume, for example, one or more empty tanks or deposits suitably distributed over the installation. This kind of space can be implemented at a relatively low cost without any need for substantially interfering with the design and volume of the compartments of the subsystem for sun-tracking. In this document, the term "flotation space" refers to space that is not occupied by or constituted by the compartments of the sub-system for sun-tracking.

In some embodiments, the volume of the floatation space is at least five (such as 5, 10, 20, 30 or more) times the volume of all compartments of the subsystem for sun-tracking.

Thus, and whereas the subsystem for sun-tracking may feature a relatively small volume and whereby the amount of fluid such as water that is to be transferred for control of the inclination during sun-tracking can be kept relatively small, thereby contributing to efficient use of energy and enhanced energetic efficiency of the installation, prevention of submersion can be guaranteed with a high level of certainty by providing an additional, large but relatively inexpensive floatation space filled with air or any other low density matter.

In some embodiments, the support structure has a length according to a longitudinal axis of the support structure and a width perpendicular to the longitudinal axis, and the length is at least twice the width (such as at least three, four, five, ten or fifteen times the width), and the subsystem for sun-tracking is configured for pivoting the installation according to the longitudinal axis.

The fact that for efficient sun-tracking a substantial change of inclination is needed during the day, such as a change in the degree of inclination by up to 60 degrees or more, it is generally preferable to have installations and support structures featuring a relatively large length-to-width ratios. In such cases, it may be practical to implement the compartments of the subsystem for sun-tracking only at some locations along the length of the support structure, such as at its longitudinal ends and optionally at one or more positions between the ends. However, an additional flotation space can in many embodiments be provided extending along substantially the entire length of the support structure.

In some embodiments, the installation further comprises a locking mechanism adapted to lock the at least one solar panel in a position in which the at least one solar panel rests on the buoyant support structure so that uplift loads are transmitted to the support structure through the locking mechanism.

The locking mechanism comprises a mechanical device that retains one or more solar panels of the installation lying on the surface of the support structure for increasing the survivability of the installation. The same locking mechanism may even lock all the solar panels of the installation so that the installation does not need to be provided with a plurality of said mechanisms.

The locking mechanism may be remotely unlocked when the same is in a locked state (i.e. retaining the solar panel or panels), for instance using an electromechanical device that actuates a component that keeps the mechanism in locked state or, alternatively, the locking mechanism may be coupled to a pressure line that is pressured by a compressed air pump of means for controlling an amount of liquid in the compartments. In the case of the latter, the component may unlock the mechanism when there is pressure in said line. This may be advantageous because when there are adverse weather conditions, a power outage may occur, the pump thus not being electrically powered. Then, the compressed air is released from the compartments, the buoyancy is reduced as liquid fills the compartments, and the solar panel or panels are lowered to the position in which they rest on the support structure for increasing the survivability. When the weather conditions improve, the pump may be electrically powered once again, thereby increasing the buoyancy of the compartments and unlocking the locking mechanism.

A second aspect of the invention relates to a method comprising: arranging at least one solar panel on a buoyant support structure, the at least one solar panel comprising a plurality of photovoltaic cells; arranging a subsystem for sun-tracking, the subsystem for sun-tracking comprising at least one compartment and means for controlling an amount of liquid (typically water) in the at least one compartment; arranging both the subsystem for sun-tracking and the at least one solar panel on the buoyant support structure on a surface of a marine environment (e.g. water surface of a river, a sea, a water reservoir, a lake or an ocean); and changing a degree of inclination of the support structure in relation to a horizontal plane (and, thus, in relation to the surface of the marine environment, said surface being parallel or substantially parallel to the horizontal plane in many occasions) by changing the amount of liquid in the at least one compartment.

The at least one solar panel can increase the surface thereof that receives sunlight upon tracking the position of the sun by changing the degree of inclination of the support structure. Accordingly, by changing said degree of inclination the photovoltaic power generation of the at least one solar panel (and, thus, of an installation comprising the at least one solar panel, the buoyant support structure and the subsystem for sun-tracking) may be increased.

As described with reference to the first aspect of the invention, the buoyant support structure typically comprises one or more compartments that provide for floatability by being completely or partly filled with a gas or a mixture of gases such as air, and/or by other elements featuring a relatively low density that provide for buoyancy. In some embodiments the support structure may comprise means for emergency buoyancy support that are not contributing to buoyancy under normal conditions but that contribute to buoyancy under extreme conditions.

In some embodiments, the support structure comprises a ballast space, and the at least one compartment is at least partially positioned higher up than the ballast space. In some of these embodiments, the ballast space comprises a single enclosure or tank, whereas in some other embodiments the ballast space comprises a plurality of enclosures or tanks

In some embodiments, when the support structure is in a non-inclined position, the at least one compartment is substantially placed above the surface of the water on which the buoyant support structure is floating.

In some embodiments, the method further comprises introducing water of the marine environment into the ballast space (with a single or a plurality of compartments or tanks) when the support structure is inclined beyond a certain inclination threshold. Accordingly, the buoyancy of the support structure is reduced upon introduction of water into the ballast space. To this end, the ballast space is in fluid communication with at least one water inlet positioned in correspondence with a side of the support structure, so that water of the marine environment will flow into the ballast space through the at least one water inlet when the support structure is inclined beyond the certain inclination threshold.

In some embodiments, a plurality of such water inlets is present, for example, at least two water inlets positioned on opposite sides of the ballast space, or multiple water inlets on one or more sides of the ballast space.

In some embodiments, the water inlet communicates with the ballast space via a pipe.

In some embodiments, the method further comprises selectively extracting liquid from any compartment (e.g. single compartment, first compartment, second compartment, etc.) of the at least one compartment to the marine environment, and/or selectively introducing liquid from the marine environment into any compartment (e.g. single compartment, first compartment, second compartment, etc.) of the at least one compartment; preferably, the step of changing the degree of inclination of the support structure in relation to the horizontal plane comprises selectively extracting and/or introducing the liquid in this manner.

With the selective liquid extraction and/or introduction, the exposure to wind of the support structure and/or the at least one solar panel is reduced (when the buoyancy is reduced), or the capability of changing the (degree of) inclination of the support structure in relation to the horizontal plane is increased (when the buoyancy is increased). To this end, the means for controlling an amount of liquid in the at least one compartment are arranged or further arranged for selectively extracting liquid from any compartment of the at least one compartment to the marine environment, and/or for selectively introducing water from the marine environment into any compartment of the at least one compartment.

In some embodiments, the step of changing the degree of inclination of the support structure in relation to the horizontal plane comprises changing both a first degree of inclination in a first axis of the support structure and a second degree of inclination in a second axis of the support structure in relation to the horizontal plane by: selectively extracting liquid from the at least one compartment to the marine environment, and/or selectively introducing liquid from the marine environment into the at least one compartment. In these embodiments, the at least one compartment comprises a single compartment with a shape (e.g. a three-dimensional curvilinear or helicoidal shape optionally having two ends at different heights in relation to the horizontal) such that the amount of liquid in the single compartment determines both the first degree of inclination and the second degree of inclination in relation to the horizontal plane.

Accordingly, when the amount of liquid is changed in the single compartment, either by adding further liquid therein or by removing liquid therefrom, the inclination of the support structure is changed in one or two directions at the same time.

In some of these embodiments, the support structure comprises an ellipsoid shape and the longitudinal axis of the support structure is parallel to the horizontal plane.

In some embodiments, the at least one compartment comprises a first compartment and a second compartment, the first and second compartments being optionally placed in correspondence with opposite sides of the support structure, so that inclination of the support structure or the at least one solar panel is at least in part determined by the level of liquid in the first and second compartments.

In some embodiments, compartments may be placed opposite each other.

In some embodiments, the method further comprises selectively displacing liquid from the first compartment to the second compartment, and/or from the second compartment to the first compartment; preferably, the step of changing the degree of inclination of the support structure in relation to the horizontal plane comprises selectively displacing the liquid in this manner so as to increase or even maximize a surface of the at least one solar panel that receives sunlight (the sunlight preferably being received at the at least one solar panel orthogonally to the surface thereof). To this end, the means for controlling an amount of liquid in the at least one compartment are arranged or further arranged for selectively displacing liquid from the first compartment to the second compartment, and/or from the second compartment to the first compartment.

In some embodiments, the method further comprises at least one of: selectively injecting compressed air into at least one of the at least one compartment, selectively changing pressure of the compressed air within at least one of the at least one compartment, and selectively releasing the compressed air from at least one of the at least one compartment.

In some of these embodiments, the method comprises selectively changing the inclination of the support structure by selectively: injecting the compressed air, changing the pressure thereof, and/or releasing the compressed air. To this end, the means for controlling an amount of liquid in the at least one compartment comprises a compressed air pump and one or more conduits connected thereto and to at least one air inlet of the at least one compartment. Likewise, the at least one compartment of the subsystem for sun-tracking may comprise a water inlet in the form of an open end through which the liquid may enter into and leave the compartment(s); preferably, the water inlet, that is to say, the open end is at an end along the longitudinal axis of the compartment(s), and the compartment(s) is/are arranged such that the open end is at a lower height (in relation to the horizontal plane) than a second, closed end at an opposite side of the compartment(s).

In some of these embodiments, the method comprises orienting at least one of the at least one solar panel in relation to the support structure by selectively: injecting the compressed air, changing the pressure thereof, and/or releasing the compressed air. To this end, the solar panel is mechanically coupled to a pivoting mechanism (that may be attached to a supporting element) of the buoyant support structure and to two compartments of the at least one compartment. Upon changing the buoyancy of any one or both of the two compartments, the inclination of the solar panel is changed, thereby making possible the sun-tracking.

In some embodiments, the method further comprises selectively changing the inclination of a plurality of support structures by selectively: injecting compressed air into one or more compartments of each support structure, selectively changing pressure of the compressed air within the one or more compartments of each support structure, and/or releasing the compressed air from one or more compartments of each support structure. To this end, a plurality of conduits is connected to air inlets of compartments of different support structures. In some of these embodiments, a single compressed air pump is used for selectively changing the inclination of the plurality of support structures.

In some embodiments, the method further comprises selectively pumping liquid that is inside of the at least one compartment to the marine environment, and/or selectively pumping water of the marine environment into the at least one compartment; preferably, the method comprises orienting at least one of the at least one solar panel in relation to the support structure by selective pumping the liquid or the water in this manner. To this end, the means for controlling an amount of liquid in the at least one compartment comprises a pump for pumping out liquid that is inside of the at least one compartment and/or for pumping liquid into the at least one compartment. Likewise, the solar panel is mechanically coupled to a pivoting mechanism (that may be attached to a supporting element) of the buoyant support structure and to two compartments of the at least one compartment.

In some embodiments, the method further comprises arranging a subsystem for prevention of submersion that does not include the at least one compartment of the subsystem for sun-tracking. In some of these embodiments, this additional subsystem may include poles, a taut mooring system, etc., or additional tanks or deposits.

In some embodiments, the subsystem for prevention of submersion comprises a flotation space, wherein the volume of the floatation space is at least twice the volume of all compartments of the subsystem for sun-tracking. In some of these embodiments, the volume of the floatation space is at least five (such as 5, 10, 20, 30 or more) times the volume of all compartments of the subsystem for sun-tracking.

In some embodiments, the support structure has a length according to a longitudinal axis of the support structure and a width perpendicular to the longitudinal axis, and the length is at least twice the width (such as at least three, four, five, ten or fifteen times the width), and the subsystem for sun-tracking is configured for pivoting the installation according to the longitudinal axis.

In some embodiments, the method further comprises arranging a locking mechanism adapted to lock the at least one solar panel in a position in which the at least one solar panel rests on the buoyant support structure so that uplift loads are transmitted to the support structure through the locking mechanism. In some of these embodiments, the method comprises automatically or selectively locking the at least one solar panel with the locking mechanism when the at least one solar panel is resting on the buoyant support structure.

Similar advantages as those described for the first aspect of the invention may also be applicable to this aspect of the invention.

Another aspect of the invention relates to a photovoltaic power station comprising a plurality of installations according to the first aspect of the invention.

The photovoltaic power station can be arranged in a river, a sea, a water reservoir, a lake or an ocean.

In some embodiments, the means for controlling an amount of liquid in the at least one compartment comprises a compressed air pump and a plurality of conduits connected thereto and to respective air inlet or inlets of compartments of two or more installations of the plurality of installations.

### BRIEF DESCRIPTION OF THE DRAWINGS

To complete the description and in order to provide for a better understanding of the invention, a set of drawings is provided. Said drawings form an integral part of the description and illustrate some embodiments of the invention, which should not be interpreted as restricting the scope of the invention, but just as examples of how the invention can be carried out. The drawings comprise the following figures:
Figure 1 is a schematic perspective view of three installations according to an embodiment of the invention, with different inclinations relative to the water surface.
Figure 2 is a schematic cross-sectional view of an installation according to an embodiment of the invention.
Figures 3A and 3C are schematic cross-sectional views of an installation according to an embodiment of the invention.
Figures 4A and 4B are schematic perspective views of an installation according to another embodiment of the invention, whereas figure 4C is a schematic cross-sectional view of said installation.
Figures 5A to 5F are schematic perspective and cross-sectional views of an installation according to the embodiment of figures 4A to 4C.
Figures 6A and 6B are schematic perspective views of an installation according to another embodiment of the invention.
Figures 7 and 8 are schematic perspective views of buoyant support structures for installations according to embodiments of the invention.
Figure 9 is a schematic cross-sectional view of a compartment for a subsystem for sun-tracking.
Figure 10 is a schematic perspective view of an installation according to another embodiment of the invention.
Figures 11A to 11C are schematic perspective views of an installation according to another embodiment of the invention.
Figures 12A to 12E are schematic perspective views of a compartment for a subsystem for sun-tracking.
Figure 13 is a schematic perspective view of an installation according to another embodiment of the invention.

### DESCRIPTION OF A WAY OF CARRYING OUT THE INVENTION

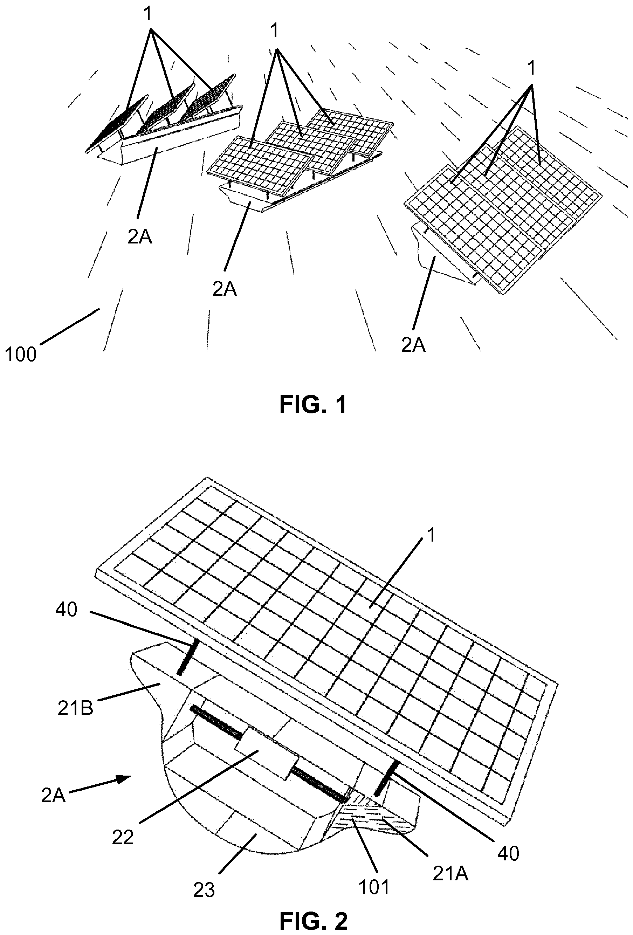

Figure 1 schematically illustrates how an installation comprising a plurality of solar panels 1 and a buoyant support structure 2A floating on the surface of a marine environment 100 (such as the water 100 of a sea, lake, ocean, river or reservoir) can modify its inclination (in the illustrated embodiment, according to one axis). This kind of adaptation of the inclination is useful for sun-tracking, that is, it allows the angle of incidence between the sunlight and the solar panel to be optimized or at least maintained within an appropriate range throughout the day, by modifying the inclination of the support structure 2A (and thereby of the installation as a whole) with regard to the horizontal plane, that is, with regard to the water 100 surface. This can be appropriate as a cost and energy efficient alternative or complement to complex mechanical systems for modifying the angle of the solar panels 1 with regard to the support structure 2A. The support structure may comprise a hollow hull.

Figure 2 illustrates how the change of inclination can be implemented by providing the support structure 2A with a subsystem for sun-tracking comprising one or more compartments 21A, 21B and means 22, typically involving one or more pumps and associated conduits, for pumping a fluid, typically water, into and out of the compartment or compartments 21A, 21B. For example, in the embodiment of figure 2, the pump 22 can be used for pumping water between a compartment 21A arranged in correspondence with one side of the support structure and/or a compartment 21 B arranged in correspondence with an opposite side of the support structure; additionally or alternatively, the pump 22 can be used for pumping the external water 100 into one or both compartments 21A, 21B and also for pumping water 101 out from the compartment(s) to the external water 100 on which the installation is floating. Thereby, the center of gravity is displaced towards the side of the support structure where the compartment 21A is being filled with water and away from the side of the support structure where the compartment 21B is being emptied, and this causes the support structure to incline accordingly in relation to the surface of the water. Thus, by coordinating the level of water within the compartments with the position of the sun, an appropriate orientation of the solar panels 1 in relation to the sunlight can be achieved and maintained throughout the day or, at least, throughout a substantial part thereof. The solar panels 1 remain fixed relative to the (floating) support structure 2A owing to the supporting elements 40 for attaching the solar panels 1 to the support structure 2A.

In the embodiment of figure 2, the compartments 21A and 21B are placed high up on the structure. More specifically, the centers of gravity of the compartments (not taking their fluid contents into account) are placed above the center of gravity of the support structure when the support structure is in its neutral non-inclined position, and featuring the normal ballast. Also, the compartments 21A and 21B are placed sideways from the center of gravity, close to the respective sides of the support structure. As easily understood from figure 2, thereby a lever effect is achieved that allows for a substantial change in the inclination by displacing a relatively small amount of fluid from one compartment to the other, or out of one of the compartments and into the other, or between the compartments and the external water.

During operation of this kind of installation, weather conditions may change and harsh conditions such as high wind speeds may represent a threat, for example, by contributing to an increased inclination, beyond the limit for which the installation has been designed. This can in principle be remedied, at least in part, by operating the subsystem for sun-tracking to contravene the increase in inclination, but sometimes this is not enough, and there is always a risk that a failure may occur that affects the operation of the pumps of the subsystem for sun-tracking.

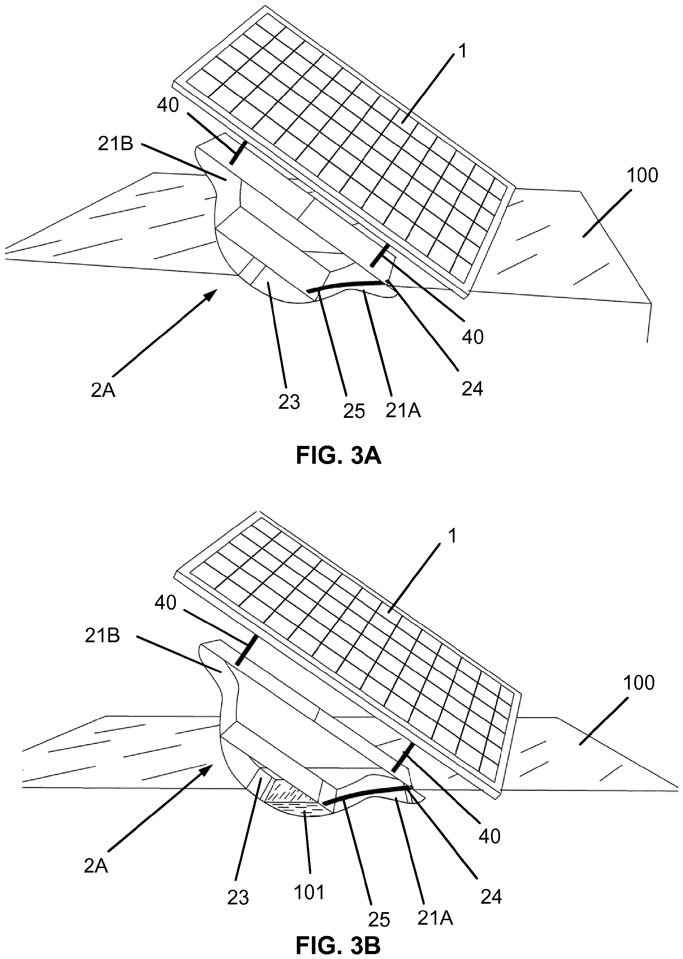

Figures 3A to 3C schematically illustrate how, in accordance with an embodiment of the invention, this risk is dealt with by providing a water inlet 24 at a certain height of the support structure, a water inlet 24 that communicates with a ballast space 23 within the support structure. In this embodiment, the ballast space 23 includes space in a bottom region of a body of the support structure, below the compartments 21A and 21B, and the water inlet 24 communicates with the ballast space through one or more pipes 25. The water inlet 24 and the pipe 25 have been illustrated only in correspondence with one side of the support structure (namely, the side featuring the compartment 21A), but it may be preferred that a corresponding arrangement is provided also at the other side. Generally, it may be preferred to have multiple water inlets 24 arranged along one or more sides of the support structure.

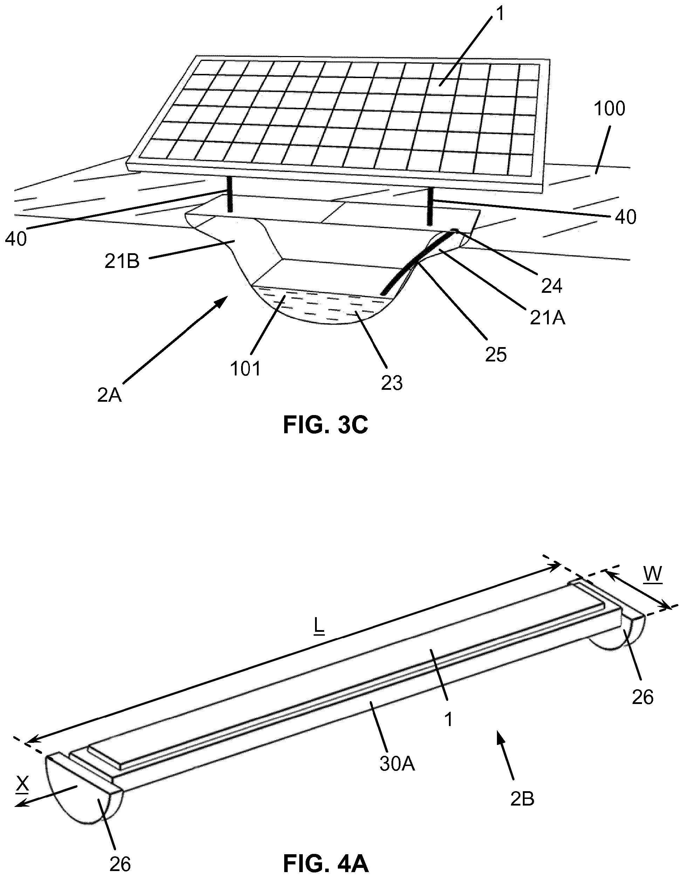

As schematically illustrated in figure 3A, during normal operation and sun-tracking the water inlet 24 will remain above the surface of the water in which the installation is placed. However, as schematically illustrated in figure 3B, it may occur (for example, in the case of strong winds) that the inclination of the installation exceeds a certain threshold, and then the water inlet 24 will become submerged, whereby water will flow into the ballast space 23 by gravity. This will serve to displace the center of gravity of the installation to the bottom, as schematically illustrated in figure 3C, thereby increasing its stability and displacement, reducing its inclination and also reducing the distance between the panel 1 and the water 100 level, which causes less exposure to the wind. Later on, the water 101 can be pumped out of the ballast space 23 if desired, by corresponding pumps (not shown in figures 3A to 3C).

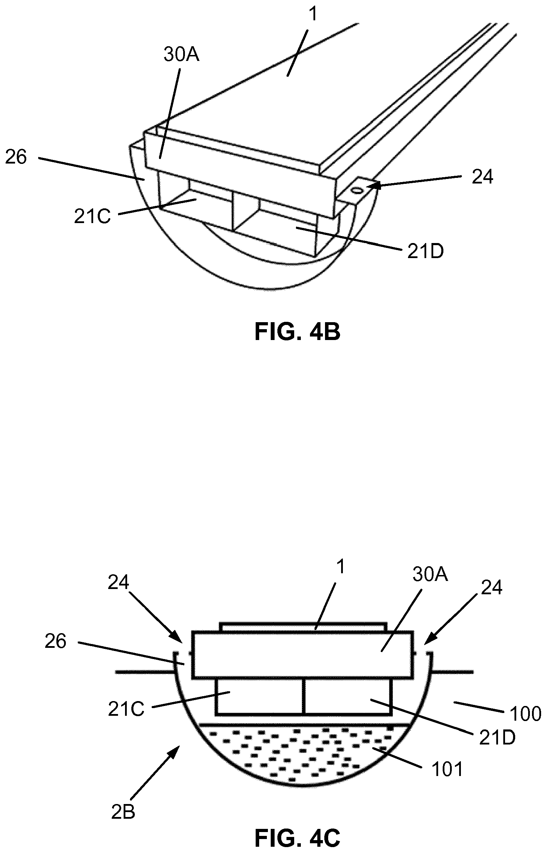

Figures 4A to 4C schematically illustrate an installation according to an embodiment of the invention in which the compartments 21C and 21D of the subsystem for sun-tracking are arranged in correspondence with two longitudinal ends of the buoyant support structure 2B, for example, on respective sides of enclosures 26 shaped as half cylinders 26 and each of which may serve as ballast space.

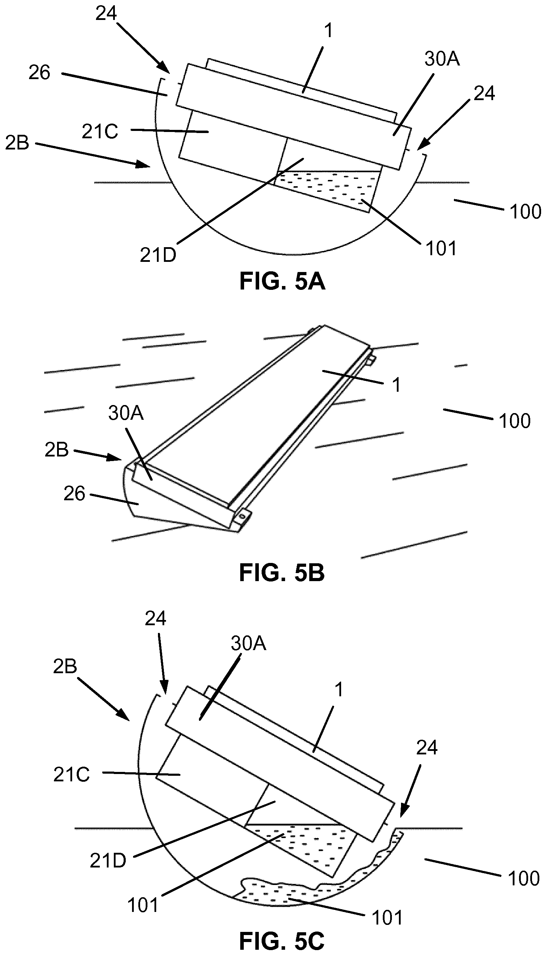

By displacing for example water 101 between the respective compartments 21C, 21D within each half cylinder 26, or between the compartments 21C, 21D within the half cylinders 26 and the external water 100 on which the installation is floating, the inclination of the support structure 2B may be adapted to follow the movement of the sun. Also, the half cylinders 26 are provided with water inlets 24 at opposite corners thereof that allow the ingress of water 101 when the support structure 2B is inclined beyond a certain inclination threshold, as illustrated with figures 5A to 5F. In this sense, each half cylinder 26 may function as a ballast space when water 101 is present therein since the buoyancy of the installation decreases and, consequently, the installation goes deeper in relation to the horizontal plane and, thus, in relation to the surface of the external water 100 as seen in figure 4C.

Now, the volume represented by these two half cylinders 26 may not be enough to guarantee that submersion of the installation or relevant parts thereof can be prevented also during for example stormy and/or snowy conditions, etc. Thus, to prevent submersion, an additional floatation space is provided in the form of one or more compartments or enclosures 30A extending along the support structure 2B between the two half cylinders 26 incorporating the compartments 21C, 21D of the sub-system for sun-tracking. Thereby, the costs involved with the subsystem for sun-tracking in terms of manufacture and operation can be kept relatively low, while submersion of the relevant parts of the installation, also under harsh weather conditions, can be prevented with a reasonable degree of certainty. In other embodiments, immersion can be prevented by other means, such as poles, chains, ropes, etc., instead of or in addition to the additional flotation space.

It may be preferable to provide the installation with a relatively large length-to-width ratio (L/W) so that the volume of the floatation space is larger or much larger than the volume of the compartments used for sun-tracking; the length corresponds to the dimension parallel to the axis X around which the installation pivots during sun-tracking, as schematically illustrated in figure 4A. For example, L/W may be larger than 4, 5, 10, etc. Sometimes, it may be practical to provide the subsystem for sun-tracking at the longitudinal ends of the support structure, and an additional flotation tank along the entire support structure, as schematically illustrated in figures 4A to 4C.

When the half cylinders 26 have their length extended (the length being along the X axis represented), an embodiment similar to that of figures 1, 2 and 3A to 3C is obtained. In such cases, in some embodiments a single half cylinder is provided extending along the X axis represented, whereas in other embodiment two half cylinders are provided at ends of the installation as in the embodiment of figures 4A to 4C.

Figures 5A to 5F show the installation of figures 4A to 4C when different levels of water are present in the compartments 21C, 21D and the half cylinders 26 thereof.

As illustrated in figures 5A and 5B, the water 101 within the compartments 21C, 21D and the one or more compartments or enclosures 30A of the floatation space keep the buoyant support structure 2B and, thus, the installation in a slightly inclined position. In this example, only one of the compartments 21D has water 101 therein, thus the center of gravity of the support structure 2B is displaced towards the right side when observing the cross-section of figure 5A, thereby causing the slight inclination of the structure 2B. In this position, the water inlets 24 of the half cylinders 26 are above the surface of the marine environment 100, thus no water 100 flows into the half cylinders 26.

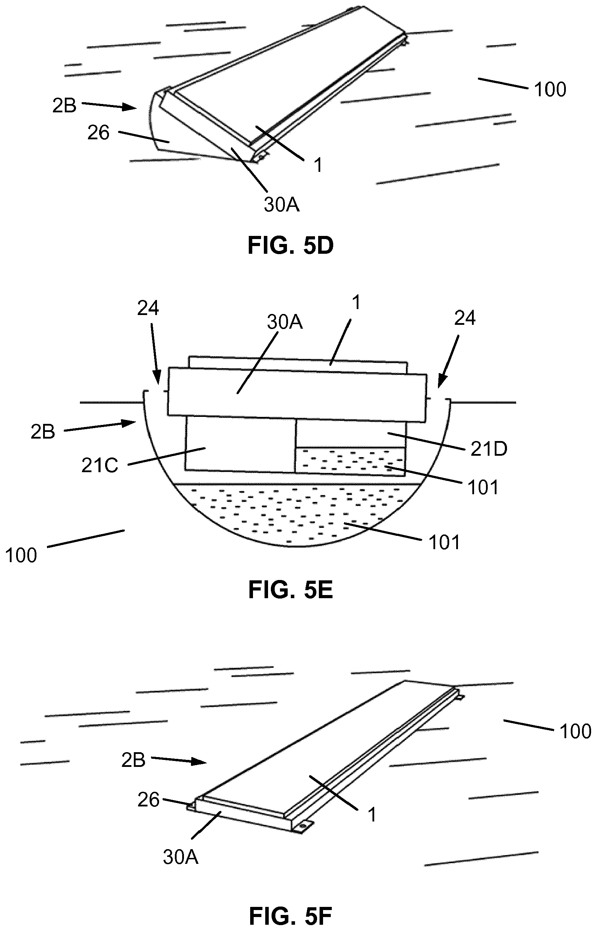

Turning now to figures 5C and 5D, the support structure 2B has the same amount of water 101 in one of the compartments 21D, however due to, for example, a wind gust or a wave, the support structure 2B has been further inclined. Due to this greater inclination, one water inlet 24 of one or both half cylinders 26 has reached the surface of the water 100, thereby allowing the flow of water 101 into the corresponding half cylinder or half cylinders 26.

As water 101 enters into the half cylinder(s) 26, which acts as ballast space, the buoyancy of the support structure and, thus, of the installation decreases, thereby both lowering the vertical position thereof with respect to the surface of the marine environment 100 and reducing the inclination thereof as best seen in figures 5E and 5F. The support structure 2B progressively reduces its inclination with respect to the horizontal plane and may even attain a substantially horizontal position in which the floatation space 30A and the solar panel 1 are also substantially horizontal. Due to the volume of water 101 in the half cylinders 26, the center of gravity is substantially at the center along the horizontal direction and towards the bottom when the cross-section of figure 5E is observed; accordingly, the volume of water 101 in one of the compartments 21D does not cause a significant change of inclination of the support structure 2B.

In the configuration illustrated in figures 5E and 5F, the water inlets 24 are above the surface of water 100, and even if they are at a reduced vertical distance from said surface no further water 100 enters into the half cylinders 26. Moreover, the reduced buoyancy causes that a significant portion of the support structure 2B and, thus, the installation to be underwater. Due to the reduced portion of the installation being above the surface of water 100, the installation is less exposed to wind as little surface thereof is above said surface, thereby increasing the survivability of the installation.

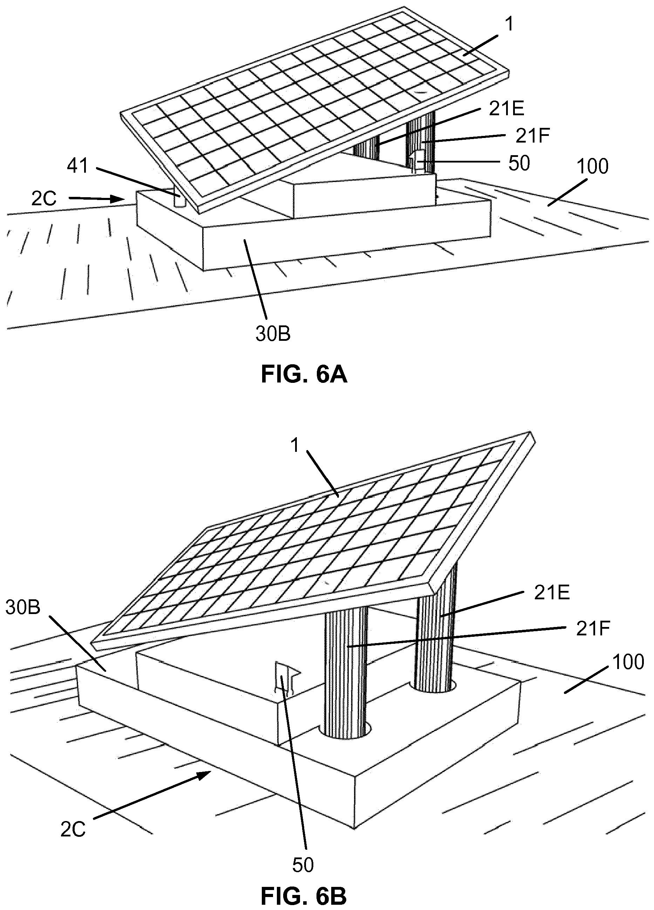

Figures 6A and 6B show an installation according to another embodiment. The installation comprises at least one solar panel 1 arranged on a buoyant support structure 2C by means of a supporting element 41 and a subsystem for sun-tracking; the subsystem for sun-tracking comprising two compartments 21E, 21F with adjustable buoyancy and means for controlling an amount of liquid within the compartments. The installation further comprises a locking mechanism 50 and an additional floatation space is provided in the form of one or more compartments or enclosures 30B.

The solar panel 1 is mechanically coupled to each of the supporting element 41 and both compartments 21E, 21F. The end of the supporting element 41 that is coupled to the solar panel 1 comprises a pivoting mechanism for the solar panel 1, thus the solar panel 1 may pivot around said end of the supporting element 41. The pivoting mechanism may be, for example, a ball joint.

Further, the two compartments 21E, 21F change the orientation and/or inclination of the solar panel 1 when one or both compartments change their buoyancy. In particular, as the buoyancy of the compartments 21E, 21F is changed, they float more or less, thereby raising or lowering with respect to the water 100 surface. Owing to the coupling of the solar panel 1 to the compartments 21E, 21F, the solar panel 1 moves based on the vertical motion of the compartments 21E, 21F, thus by controlling the buoyancy of each compartment, the surface of the solar panel 1 may follow the position of the sun so as to maximize the sunlight captured.

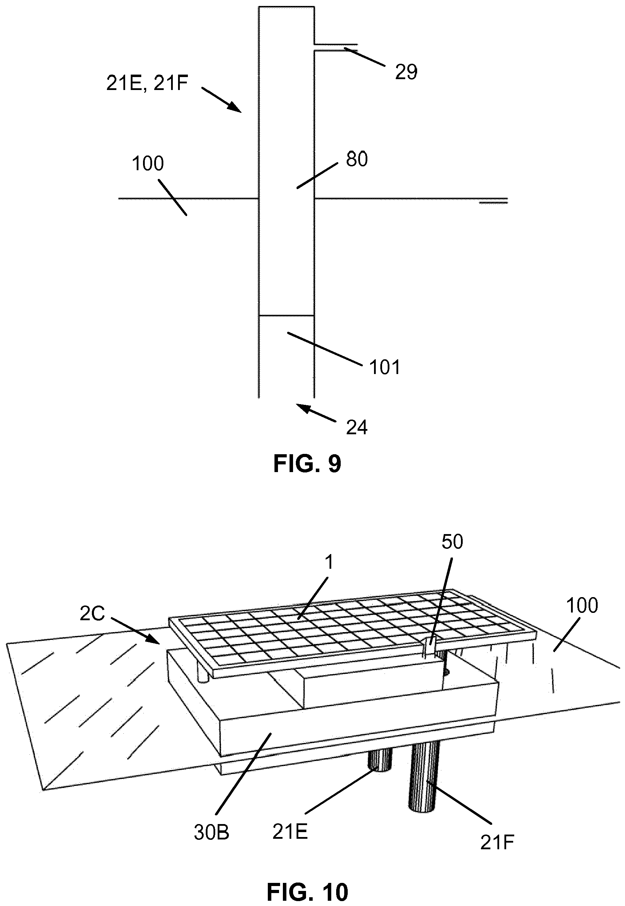

The floatation space 30B provides floatability to the support structure 2C so that the installation floats on the water 100. As illustrated in figure 10, when there are wind gusts or waves that affect the stability of the installation, the compartments 21E, 21F may be filled so that they are vertically lowered, in turn the solar panel 1 is vertically lowered too and, moreover, it is arranged parallel to the water 100 and held by the floatation space 30B for additional buoyancy, therefore a minor surface is available for the wind or waves to collide with. This is particularly advantageous for the survivability of the installation in situations in which there are adverse weather conditions. In addition to this, the locking mechanism 50, which in this example is a protruding device, locks (i.e. retains) the solar panel 1 in that position to avoid damages, that is to say, it precludes the solar panel 1 from moving upwards and increasing the surface the waves or wind may collide with. In embodiments in which the means for controlling the amount of liquid in the compartment(s) comprise a compressed air pump, said pump may also be used for unlocking the locking mechanism 50 when so desired, for instance when the weather conditions are less harsh. In such case, while the compressed air pump is pumping air, a pressure line coupled to the locking mechanism 50 is pressured and a component of said mechanism 50 may unlock it so that the solar panel(s) are moveable relative to the buoyant support structure. In some other embodiments, the locking mechanism 50 may be unlocked with an electromechanical device that actuates said component when so commanded electronically.

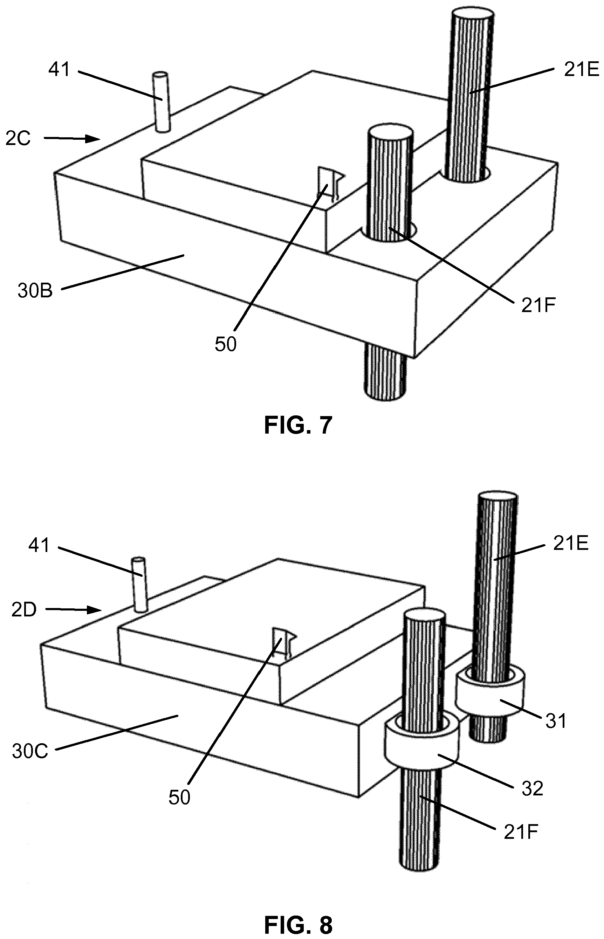

In this embodiment, and as illustrated in figure 7, the compartments 21E, 21F are tubular compartments that go through respective holes on the floatation space 30B. Accordingly, the compartment(s) within the floatation space 30B do not reach these holes. The compartments 21E, 21F protrude from below of the floatation space 30B such that they are partially submerged in the water 100.

In other embodiments, the installation comprises a floatation space 30C as illustrated in figure 8. The floatation space 30C is provided with rings on a side thereof for receiving the compartments 21E, 21F. Other arrangements are also possible for introducing the compartments 21E, 21F in a floatation space.

Figure 9 is a schematic cross-sectional view of a compartment 21E, 21F, for instance those illustrated with reference to the embodiments of figures 6 to 8 and 10.

Each compartment 21E, 21F is partially submerged in water 100 and comprises both an air inlet 29 and a water inlet 24, the latter being an open end of the compartment 21 E, 21F that makes possible ingress and egress of water 101.

In some embodiments, the means for controlling an amount of liquid that the installation comprises are means comprising a compressed air pump and one or more conduits connected to both the pump and the air inlet 29. The pump introduces compressed air 80 into the compartments 21E, 21F, or increases/reduces the pressure of the compressed air 80 within the compartments 21E, 21F, or releases the compressed air 80 from the compartments 21E, 21F. The amount of liquid, in this case water 101, within the compartments 21E, 21F is controlled by adjusting the amount of compressed air 80 and the pressure thereof since the compressed air 80 regulates the amount of liquid that can enter into the compartments 21E, 21F through the water inlet 24, thereby effectively changing the buoyancy of each compartment 21E, 21F.

When there is a power outage, for instance due to adverse weather conditions, the compressed air pump stops the pumping of compressed air and the compressed air is released from the compartments through the air inlets. Consequently, water 101 gradually fills up the compartments through the open end, and the installations lose buoyancy. The solar panel(s) are lowered until they rest on the buoyant support structure, something that increases the survivability of the installation. Further, at this point, the locking mechanism 50 as described with reference to figures 6A and 6B lock the solar panel(s) in that position, thus any upward loads on the solar panel(s) such as wind uplift or waves are transmitted to the support structure by means of the locking mechanism 50. Accordingly, when there is no pressure in a line of the means, the buoyancy of the compartments is negative.

In some embodiments, the same compressed air pump may be connected, with a plurality of conduits, to a plurality of installations with compartments 21E, 21F as illustrated in figure 9 so as to change the amount of compressed air 80 within the compartments, so it is not necessary to provide a plurality of compressed air pumps. When the installations are arranged with similar orientations, all the solar panels may preferably be oriented and inclined in the same way, thus the control of compressed air within the compartments is straightforward as they should have a first buoyancy or a second buoyancy; this is so because each of the two compartments 21E, 21F is to orient the solar panel 1 depending on the position of the sun.

In some other embodiments, the means for controlling an amount of liquid that the installation comprises are means comprising a pump for pumping out liquid 101 that is inside of the compartments 21E, 21F.

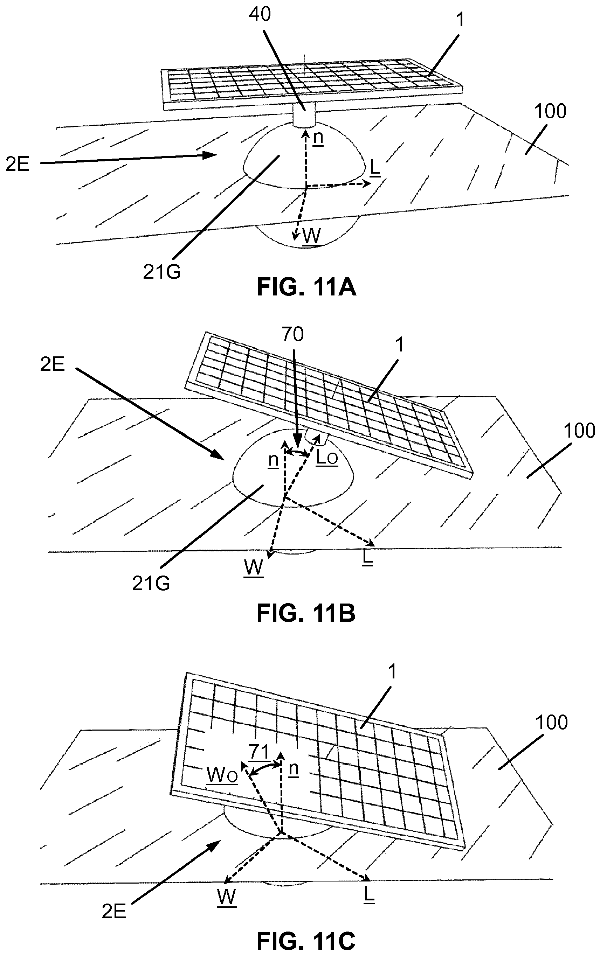

Figures 11A to 11C are schematic perspective views of an installation according to another embodiment of the invention. The installation comprises a solar panel 1 arranged on a buoyant support structure 2E by means of a supporting element 40 and a subsystem for sun-tracking in turn comprising a compartment 21G with adjustable buoyancy and means for controlling an amount of liquid in the compartment. In this embodiment the support structure 2E has a sphere shape, whereas in other embodiments it has other shapes, such as an ellipsoid shape.

The installation is capable of tracking the sun such that the solar panel 1 can be inclined with respect to two different axes yet it has a single compartment 21G. In particular, the compartment 21G has a shape that displaces the position of the center of gravity of the support structure when different amounts of liquid are therein. Thus, as liquid starts to fill up the compartment 21G, the center of gravity is displaced along a lengthwise axis L of the support structure 2E, along a widthwise axis W of the support structure 2E, or along both axes L, W.

With reference to figure 11A, the installation is floating on water 100 in an upright resting position in which, for example, the compartment 21G does not have any liquid therein, or is full of liquid (something which has a dependence upon the shape of the compartment 21G). For illustrative purposes, the lengthwise and widthwise axes L, W of the support structure 2E are represented with dashed lines; since in this embodiment the support structure 2E is a sphere, said axes could be defined in other directions too as long as one is perpendicular to the other. Also illustrated in the figure is a normal vector n (with a dashed arrow) of the horizontal plane, said plane matching the surface of the water 100 in this embodiment.

When, for example, the means for controlling the amount of liquid add liquid within the compartment 21G, the compartment 21G is partially filled up thereby displacing the center of gravity depending upon the shape of said compartment 21G. This is illustrated in figure 11B as the installation rotates owing to the displacement of the center of gravity. In this example, the rotation is along the lengthwise axis L, which in contrast to figure 11A is now facing downwards instead of being horizontal and parallel to the horizontal plane. For the sake of clarity, an orthogonal of the lengthwise axis L_{O} is represented in dashed line and which is not parallel to the normal vector n anymore. A first degree of inclination of the installation is provided and corresponds to the angle 70 formed between the horizontal plane and the lengthwise axis L, or between the orthogonal of the lengthwise axis L_{O} and the normal vector n.

Upon further changing the amount of liquid in the compartment 21G, the center of gravity is further displaced owing to the shape of the compartment 21G. As illustrated in figure 11C, the displacement relative to the position of figure 11B is in the widthwise axis W, which in this case is facing downwards and not horizontal anymore. For the sake of clarity, an orthogonal of the widthwise axis W_{O} is represented in dashed line; as it can be appreciated, W_{O} is not parallel to the normal vector n of the horizontal plane. Therefore, in addition to the first degree of inclination described with reference to figure 11B, a second degree of inclination of the installation is provided and corresponds to the angle 71 formed between the horizontal plane and the widthwise axis W, or between the orthogonal of the widthwise axis W_{O} and the normal vector n. A single compartment 21G can cause the inclination in two different directions as illustrated in these figures.

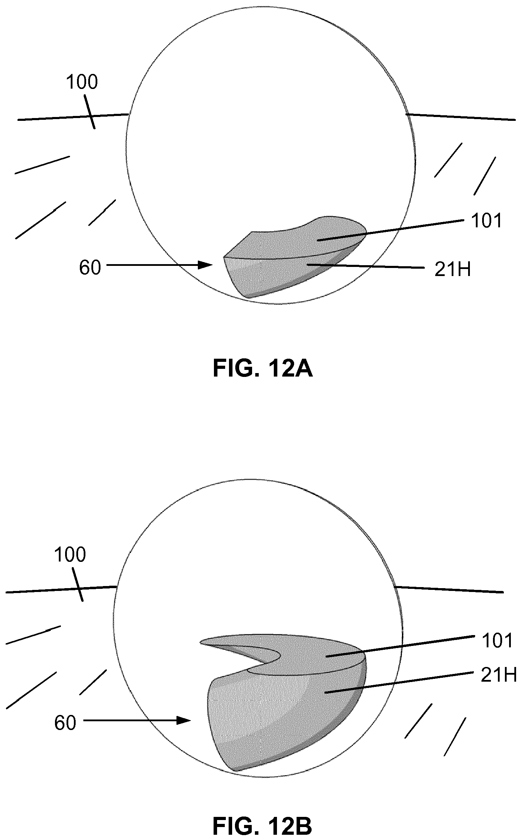

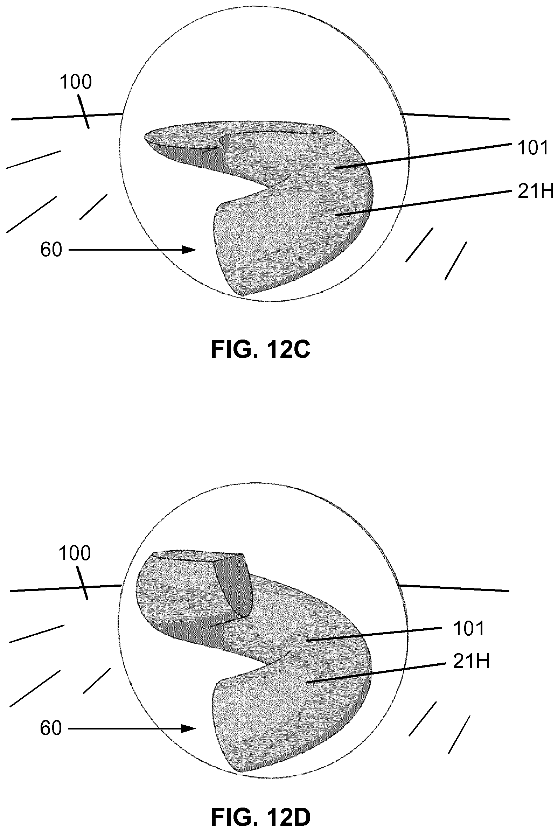

Figures 12A to 12E are schematic perspective views of a compartment 21H for a subsystem for sun-tracking as different amounts of liquids are therein. In this embodiment, the compartment 21H is within a buoyant support structure in the form of a sphere, but in other embodiments the compartment 21H is within a buoyant support structure having a different shape.

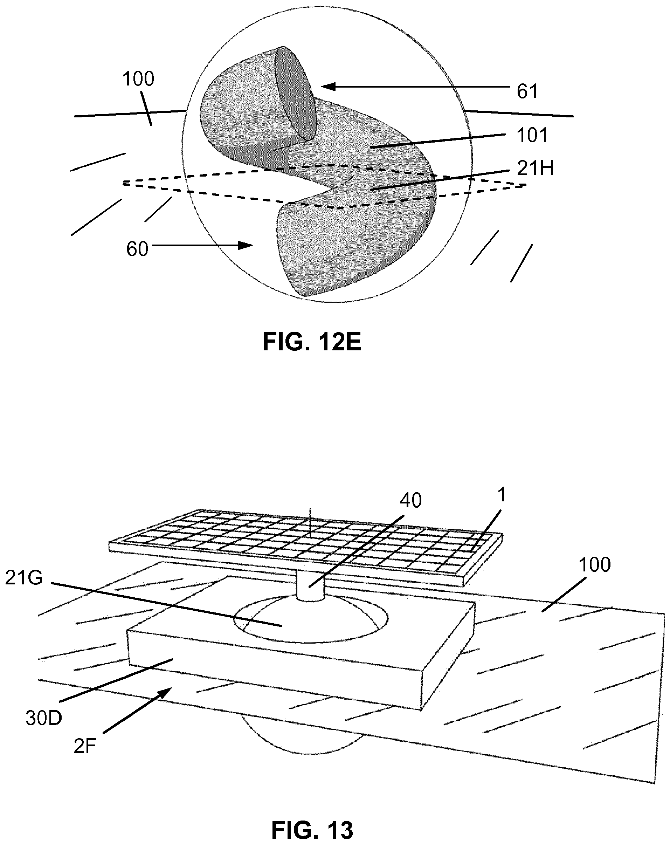

The shape of the compartment 21H is curvilinear, in this particular example it is helicoidal, and open, i.e. has two unconnected ends 60, 61 as best seen in figure 12E when the compartment 21H is filled up with liquid 101 while the installation is floating on water 100, With reference to figure 12E, a horizontal plane is represented with dashed lines for the sake of clarity so as to better illustrate that each end 60, 61 of the compartment 21H is at a different height relative to the horizontal plane. In this example, the shape of the compartment 21H corresponds to a truncated ring that extends in a vertical direction (i.e. perpendicular to the horizontal plane).

As it can be appreciated from figures 12A to 12E, owing to the different amounts of volume of liquid 101 in the different parts of the support structure that comprises the compartment 21H, the position of the center of gravity changes for the different amounts of liquid 101, thus as the compartment 21H is partially or completely full of liquid or empty of liquid, the displacement of the center of gravity causes the change in inclination of the installation as exemplary illustrated in figures 11A to 11C.

Figure 13 is a schematic perspective view of an installation according to another embodiment of the invention. The installation is similar to that of the embodiment of figures 11A to 11C, but in this embodiment the installation further comprises an additional floatation space is provided in the form of one or more compartments or enclosures 30D. The compartments or enclosures 30D surround part of the buoyant support structure 21G so that, in the event that the support structure 21G is to get submerged or excessively rotated for some reason (e.g. due to waves or wind gusts), the solar panel 1 rests on the compartments or enclosures 30D of the floatation space instead of getting submerged. Accordingly, this floatation space provides the installation with survivability. In some embodiments, the compartments of the subsystem for sun-tracking may be nested with the additional flotation space, such as fully or partially placed inside of the additional flotation space.

In this text, the term "comprises" and its derivations (such as "comprising", etc.) should not be understood in an excluding sense, that is, these terms should not be interpreted as excluding the possibility that what is described and defined may include further elements, steps, etc.

Unless otherwise specified, any indicated ranges include the recited end points.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An installation for photovoltaic power generation comprising at least one solar panel (1) comprising a plurality of photovoltaic cells, and a buoyant support structure (2A-2F), the at least one solar panel (1) being arranged on the support structure (2A-2F), the installation further comprising a subsystem for sun-tracking, the subsystem for sun-tracking comprising at least one compartment (21A-21H) and means (22) for controlling an amount of liquid in the at least one compartment (21A-21H), whereby the amount of liquid in the at least one compartment (21A-21H) determines a degree of inclination of the support structure in relation to a horizontal plane.

2. The installation according to claim 1, wherein the support structure comprises a ballast space (23,26), and wherein the at least one compartment (21A-21H) is at least partially positioned higher up than the ballast space (23,26).

3. The installation according to any one of the preceding claims, wherein the means (22) for controlling an amount of liquid in the at least one compartment (21A-21H) are arranged for selectively extracting liquid from any compartment of the at least one compartment (21A-21H) to a water (100) on which the installation floats, and/or for selective introducing liquid from the water (100) on which the installation floats into any compartment of the at least one compartment (21A-21H).

4. The installation according to any one of the preceding claims, wherein the at least one compartment (21A-21H) comprises a single compartment (21G,21H) with a shape such that the amount of liquid in the single compartment (21G,21H) determines both a first degree of inclination (70) in a first axis (L) of the support structure (2E,2F) and a second degree of inclination (71) in a second axis (W) of the support structure (2E,2F) in relation to the horizontal plane, the single compartment (21G,21H) preferably having a helicoidal shape that has two ends at different heights in relation to the horizontal plane.

5. The installation according to any one of claims 1-3, wherein the at least one compartment comprises a first compartment (21A,21 C) and a second compartment (21 B,21 D), the first (21A) and second (21B) compartments being optionally placed in correspondence with opposite sides of the support structure (2A-2B), so that inclination of the support structure or the at least one solar panel (1) is at least in part determined by the level of liquid in the first (21A,21C) and second (21B,21D) compartments, and wherein the means (22) for controlling an amount of liquid in the at least one compartment (21A-21H) are arranged for selectively displacing liquid from the first compartment (21A,21C) to the second compartment (21B,21D), and/or from the second compartment (21B,21D) to the first compartment (21A,21C).

6. The installation according to claim 2, or according to any one of claims 3-5 when depending upon claim 2, wherein the ballast space (23,26) is in fluid communication with at least one water inlet (24) positioned in correspondence with a side of the support structure (2A-2B), so that when the installation is installed in water, water will flow into the ballast space (23,26) through the at least one water inlet (24) when the support structure is inclined beyond a certain inclination threshold.

7. The installation according to any one of the preceding claims, wherein the means (22) for controlling an amount of liquid in the at least one compartment comprises a compressed air pump and one or more conduits connected thereto and to at least one air inlet (29) of the at least one compartment (21E,21 F).

8. The installation according to any one of claims 1-6, wherein the means (22) for controlling an amount of liquid in the at least one compartment (21A-21H) comprises a pump for pumping out liquid that is inside of the at least one compartment (21A-21H) and/or for pumping liquid into the at least one compartment (21A-21H).

9. The installation according to any one of the preceding claims, additionally comprising a subsystem for prevention of submersion (30A-30D) that does not include the at least one compartment of the subsystem for sun-tracking.

10. The installation according to any one of the preceding claims, further comprising a locking mechanism (50) adapted to lock the at least one solar panel (1) in a position in which the at least one solar panel (1) rests on the buoyant support structure (2C, 2D) so that uplift loads are transmitted to the support structure (2C, 2D) through the locking mechanism (50).

11. A method comprising:
arranging at least one solar panel (1) on a buoyant support structure (2A-2F), the at least one solar panel (1) comprising a plurality of photovoltaic cells;
arranging a subsystem for sun-tracking, the subsystem for sun-tracking comprising at least one compartment (21A-21H) and means (22) for controlling an amount of liquid in the at least one compartment (21A-21H);
arranging both the subsystem for sun-tracking and the at least one solar panel (1) on the buoyant support structure (2A-2F) on a surface of a marine environment (100); and
changing a degree of inclination of the support structure (2A-2F) in relation to a horizontal plane by changing the amount of liquid in the at least one compartment (21A-21H).

12. The method according to claim 11, further comprising introducing water of the marine environment into a ballast space (23,26) of the support structure (2A-2B) when the support structure (2A-2B) is inclined beyond a certain inclination threshold.

13. The method according to any one of claims 11-12, wherein:
the step of changing the degree of inclination of the support structure (2A-2F) in relation to the horizontal plane comprises changing both a first degree of inclination (70) in a first axis (L) of the support structure (2E,2F) and a second degree of inclination (71) in a second axis (W) of the support structure (2E,2F) in relation to the horizontal plane by:
selectively extracting liquid (101) from the at least one compartment (21G,21H) to the marine environment (100), and/or
selectively introducing liquid from the marine environment (100) into the at least one compartment (21G,21H); and
the at least one compartment (21A-21H) comprises a single compartment (21G,21H) with a shape such that the amount of liquid in the single compartment (21G,21H) determines both the first degree of inclination (70) and the second degree of inclination (71), the single compartment (21G,21H) preferably having a helicoidal shape that has two ends at different heights in relation to the horizontal plane.

14. The method according to any one of claims 11-12, the step of changing the degree of inclination of the support structure (2A-2F) in relation to the horizontal plane comprises selectively changing the degree of inclination of the support structure (2A-2B) in relation to the horizontal plane by selectively displacing liquid from a first compartment (21A,21C) of the at least one compartment to a second compartment (21B,21D) of the at least one compartment, and/or from the second compartment (21B,21 D) to the first compartment (21A,21C).

15. The method according to any one of claims 11-12, further comprising orienting at least one of the at least one solar panel (1) in relation to the support structure (2A-2F) by at least one of:
selectively injecting compressed air into at least one of the at least one compartment;
selectively changing pressure of the compressed air within at least one of the at least one compartment;
selectively releasing the compressed air from at least one of the at least one compartment;
selectively pumping liquid that is inside of the at least one compartment to the marine environment; and
selectively pumping water of the marine environment into the at least one compartment.
